# EUROPEAN PATENT SPECIFICATION

(11) **EP 0 891 023 B1**
(45) Date of publication and mention of the grant of the patent: **17.01.2001**
(21) Application number: 98112744.2
(22) Date of filing: 09.07.1998
(51) Int. Cl.: H01S 3/0953

(54) **High performance ejector and pressure recovery method**
Hochleistungsejektor und Verfahren zur Wiederherstellung des Drucks
Ejecteur à haute performance et méthode de rétablissement de la pression

(30) Priority: 09.07.1997 US 890224
(43) Date of publication of application: 13.01.1999
(73) Proprietor: TRW Inc., Redondo Beach, California 90278 (US)
(72) Inventor: Magiawala, Kiran R., Hawthorne, CA 90250 (US); Haflinger, Donald E., Harbor City, CA 90710 (US); Kruse, William D., Redondo Beach, CA 90277 (US)
(74) Representative: Schmidt, Steffen J., Dipl.-Ing.

(56) References cited:
- US-A- 3 863 176
- US-A- 4 235 372
- US-A- 4 247 833
- US-A- 4 487 366
- US-A- 5 735 469

## Description

### FIELD OF THE INVENTION

This invention relates generally to ejector systems and, in particular, to high performance pressure recovery systems capable of use with a high energy chemical laser.

### BACKGROUND

Ejectors and ejector systems are commonly used for moving a gas from an area of low pressure to an area of high pressure, such as to an area at ambient pressure.

Ejectors and ejector systems are commonly used in certain chemical lasers which operate under vacuum conditions. Such ejector systems draw reaction products from the chemical laser reaction chamber so as to reduce the pressure within the reaction chamber to below ambient. By use of the ejector system, reaction gases are drawn from the reaction chamber and exhausted to a suitable exhaust site, such as to the atmosphere.

Large chemical lasers, such as those useful in producing very high energy laser beams for military weapons purposes, generally require very large ejectors, typically multi-stage ejectors. Such ejector systems are, therefore, generally very heavy and very lengthy.

Where the chemical laser must be used as an anti-theater ballistic missile system, the laser is only effective if it is mounted in an airplane flying high above a theater ballistic missile launch site. This is because the effectiveness of chemical lasers as anti-theater ballistic missile weapons is largely limited to the ability of the chemical laser to intercept the theater ballistic missile with its high energy laser beam during the first few seconds after launch. After that, the effectiveness of the chemical laser to destroy theater ballistic missiles is greatly reduced.

To install and operate a chemical laser within an airplane requires that the chemical laser be as efficient, as lightweight and as compact as possible. Accordingly, the large and lengthy ejectors and ejector systems previously used for high energy chemical lasers have been found to be impractical in an aircraft-mounted chemical laser system.

There is, therefore, a need for a high efficiency (high performance ratio) ejector and ejector system which can effectively perform in conjunction with a high energy chemical laser without requiring undue weight or length.

### SUMMARY

The invention satisfies this need. The invention is a method for moving a secondary gas from a low pressure zone to a high pressure zone comprising the step of educting the secondary gas to the high pressure zone with an ejector which uses as a primary gas the reactive products of a hydrocarbon fuel and decomposed hydrogen peroxide. Such ejectors have been found to be adaptable to very highly efficient, one-stage non-metallic ejectors having sufficiently reduced weight and length to be useable in a high energy airborne chemical laser system.

The invention is also an ejector manufactured substantially from a carbon-carbon fiber composite. It has been found that such ejectors can be effectively used in high efficiency, one-stage ejector systems having very low weight and, therefore, being suitable for use in airborne chemical laser weapons systems.

### DRAWINGS

These features, aspects and advantages of the present invention will become better understood with regard to the following description, appended claims and accompanying figures where:
Figure 1 is a perspective view of an ejector having features of the invention;
Figure 2 is a cross-sectional side view of another ejector having features of the invention;
Figure 3 is a schematic diagram showing a COIL chemical laser usable with the invention;
Figure 4 is a perspective view of a pressure recovery system of an airborne COIL chemical laser having features of the invention;
Figure 5 is a perspective view of the gas generator portion of the pressure recovery system shown in Figure 4.

### DESCRIPTION OF THE INVENTION

The invention is defined by claims 1 and 4. Various embodiments are defined by the dependent claims.

The following discussion describes in detail one embodiment of the invention and several variations of that embodiment. This discussion should not be construed, however, as limiting the invention to those particular embodiments. Practitioners skilled in the art will recognize numerous other embodiments as well.

The invention is a method of moving a secondary gas from a low pressure zone to a high pressure zone comprising the step of educting the secondary gas to the high pressure zone with an ejector which uses as a primary gas the reaction products of a hydrocarbon fuel and decomposed hydrogen peroxide. In most applications, the high pressure zone is substantially at ambient pressure.

The decomposed hydrogen peroxide is mostly molecular oxygen and water. The decomposing of hydrogen peroxide can be accomplished by contacting the hydrogen peroxide at elevated temperatures (e.g., about 37.7°C-93.3°C (100°-200°F)) and elevated pressures (e.g., about 100-600 psig) with a silver-containing catalyst. To minimize the amount of weight incumbent in the hydrogen peroxide - especially when the ejector is to be used on an airborne platform - the purity of the hydrogen peroxide is preferably higher than about 70% (by weight), for example, 70% - 90% or, more preferably, 80%-90%.

The hydrocarbon fuel is typically an aviation or jet fuel, such as the hydrocarbon fuel known in the industry as JP-8.

Where the decomposed hydrogen peroxide is derived from a hydrogen peroxide having a purity of about 85% or greater, the reaction of the decomposed hydrogen peroxide with, for example, JP-8, is auto-igniting (without the assistance of a spark plug) at practical conditions of temperature and pressure. Use of such a reaction mixture, therefore, eliminates the need for separate ignition equipment.

The reaction of JP-8 and decomposed 85% hydrogen peroxide is typically carried out at oxygen/fuel ratios of about 30.5 and produces reaction products having a temperature of about 1315°C (2400°F).

The reaction of the hydrocarbon fuel and the decomposed hydrogen peroxide produces a high energy stream of reaction products composed largely of carbon dioxide and water. To maximize the efficiency and compactness of the ejector, the high pressure reaction product stream is passed through a set of multiple nozzles (e.g., 7 nozzles) and is thereby made supersonic before introduction into the inlet end of the ejector.

The method has been found effective to move the secondary gas from a low pressure zone to a high pressure zone when the pressure differential between those zones is greater than about 0.2 atmospheres, even greater than about 0.3 atmospheres with only a single stage ejector.

The ejector is made substantially from a carbon-carbon fiber composite. To minimize weight, the ejector can be greater than about 50% by weight carbon-carbon fiber composite material, preferably greater than about 80% by weight.

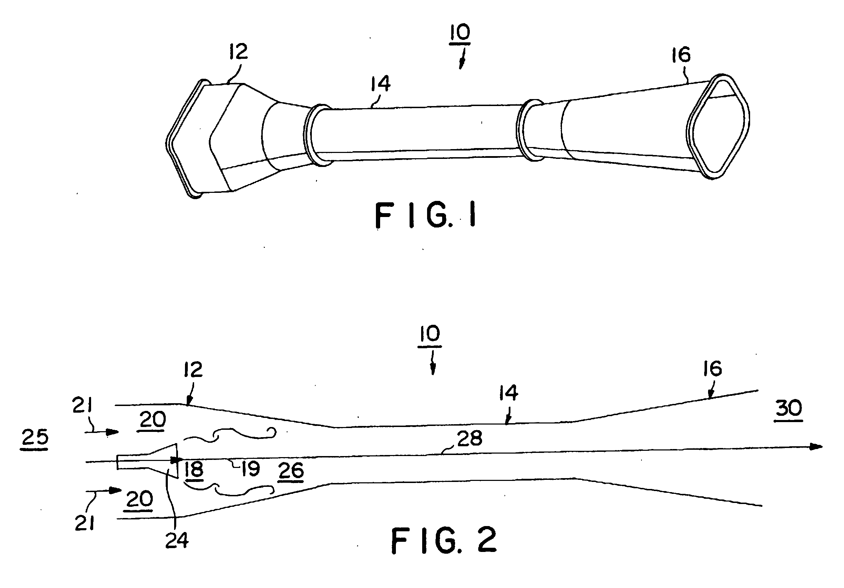

As shown in Figure 1, the ejector **10** has an inlet section **12**, a throat section **14** and an outlet section **16**. In a preferred embodiment, the inlet section **12** and the outlet section **16** are both rectangular in cross-section to maximize operating pressure margins. However, the throat section **14** is generally circular or oval in cross-section.

As shown in Figure 2, the inlet section **12** of the ejector **10** comprises an inlet zone **18** for the primary gas **19** and an inlet zone **20** for the secondary gas **21**. The inlet zone **18** for the primary gas **19** accepts high velocity primary gas **19** produced in the primary gas generator **24** and directs the primary gas **19** towards the throat section **14**. This draws secondary gas **21** from the low pressure zone **25** into the inlet zone **20** for the secondary gas **21**. The primary gas **19** and the secondary gas **21** are mixed in a convergent duct or constant pressure mixing zone **26** and flow as a combined gas mixture **28** at supersonic velocities through the throat section **14** of the ejector **10**. Near the outlet section **16** of the ejector **10**, the flow of gases **28** is reduced to subsonic velocity and the gases **28** are discharged via the outlet section **16** to the high pressure zone **30**.

Where the combined secondary and primary gas streams **28** contain oxygen, it is preferable that any carbon-carbon fiber composite materials used on the interior walls of the ejector **10** be coated with a suitable anti-oxidant material, such as a silicon-based anti-oxidant material, so as to minimize oxidative degradation of the carbon-carbon fiber composite material.

The invention has been found to provide an extremely useful high efficiency (high pressure ratio) eduction system having a fraction of the weight commonly inherent in prior art systems. Because of the high efficiency (high pressure ratio) of the ejector system, the system can frequently use single-stage ejectors, rather than multi-stage ejectors. This is extremely important when the ejectors are used on an airborne platform, where restrictions as to length (as well as weight) are a common problem.

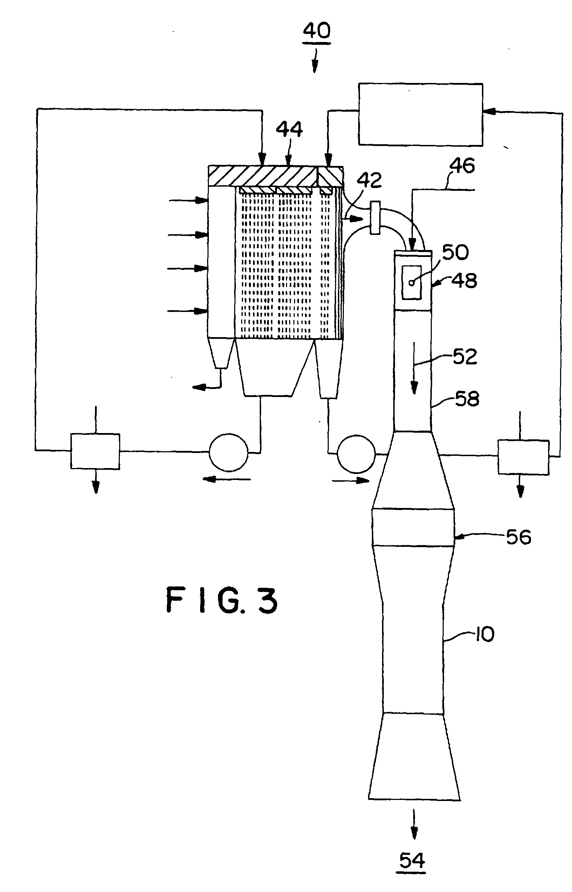

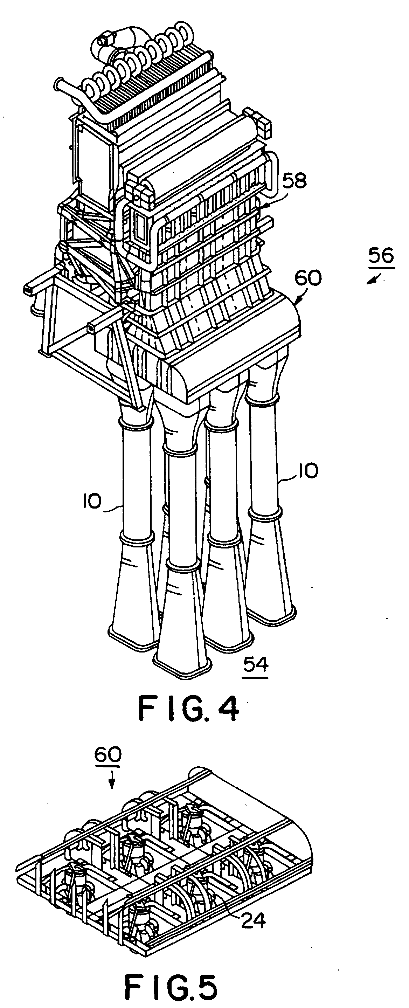

Figures 3 and 4 illustrate the use of the invention in a chemical oxygen iodine laser ("COIL"). Figure 3 illustrates a typical COIL **40** in which singlet-delta oxygen **42** is produced in a singlet-delta oxygen generator **44** and is then reacted with iodine **46** in a photon generator **48** to produce a high energy laser beam **50**. The photon generator **48** in a COIL **40** typically operates under reduced pressure conditions. Reaction products **52** produced in the photon generator **48** are exhausted to the atmosphere **54** using a pressure recovery system **56** comprising a diffuser **58**, a plenum **60** and one or more ejectors **10**.

Figures 4 and 5 illustrate a pressure recovery system 56 using the invention in an airborne COIL **40**. Reaction products **52** from the photon generator **48** are drawn through the diffuser **58** by a plurality of (e. g., six) single-stage ejectors **10** of the invention disposed in parallel. A supersonic stream of primary gas **22** is generated in the primary gas generator **24** disposed within a plenum **60** by the reaction of a hydrocarbon fuel and decomposed hydrogen peroxide. The primary gas **22** is injected into the inlet section **12** of the ejectors **10** where it is mixed with the reaction products **52** from the photon generator **48**, and the combined gaseous mixture **28** is flowed through the throat section **14**. As the mixture **28** passes through the throat section **14** and into the outlet section **16**, its velocity is slowed to subsonic, and the mixture **28** is exhausted to the atmosphere **54** through suitable exhaust fairings in the airborne platform (not shown).

Typically, the primary gas generator **24** shown in Figure 5 is jacketed with a jacket (not shown) so as to allow the primary gas generator **24** to be cooled by a coolant flowing through the jacket. The use of such a jacket effectively maintains the primary gas generator **24** sufficiently cool to prevent thermal degradation. In a preferred embodiment, the coolant is the hydrocarbon fuel to minimize the weight associated with the use of a separate coolant material and to allow the heat removed from the primary gas generator **24** to be efficiently used to pre-heat the hydrocarbon fuel prior to its being contacted with the decomposed hydrogen peroxide.

Having thus described the invention, it should be apparent that numerous structural modifications and adaptations may be resorted to without departing from the scope and fair meaning of the instant invention as set forth hereinabove and as described hereinbelow by the claims.

## Claims

1. A method of moving a secondary gas from a low pressure zone of a chemical laser to a high pressure zone (30) comprising the step of educting the secondary gas (21) to the high pressure zone (30) with an ejector (10) which uses as a primary gas (19) the reaction products of a hydrocarbon fuel and the decomposition products of hydrogen peroxide.

2. The method of claim 1 wherein the secondary gas (21) comprises the reaction products of a chemical laser; and/or
wherein the secondary gas (21) comprises the reaction products of an oxygen iodine COIL chemical laser; and/or
wherein the high pressure zone (30) is substantially at ambient pressure; and/or
wherein the pressure differential between the high pressure zone (30) and the low pressure zone is greater than about 0.2 atmospheres; and/or
wherein the pressure differential between the high pressure zone (30) and the low pressure zone is between about 0.3 atmospheres; and/or
wherein the ejector (10) is at least about 50 % carbon-carbon fiber by weight; and/or
wherein the ejector (10) is at least about 80 % carbon-carbon fiber by weight; and/or
wherein the primary gas generator (24) is jacketed and the primary gas generator (24) is cooled by a coolant flowing through a jacket-; and/or
wherein the ejector (10) has an inlet section (12) which has a rectangular cross-section; and/or
wherein the ejector (10) has an outlet section (16) which has a rectangular cross-section; and/or
wherein the ejector (10) comprises inlet (12) and outlet (16) sections having rectangular cross-sections, an a throat section (14) having a round or oval cross-section; and/or
wherein the decomposition products of hydrogen peroxide are obtained from hydrogen peroxide whose non-decomposed composition was between about 70 % and 95 % hydrogen peroxide by weight; and/or
wherein the decomposition products of hydrogen peroxide are obtained from hydrogen peroxide whose non-decomposed composition was between about 80 % and 90 % hydrogen peroxide by weight; and/or
wherein the decomposition products of hydrogen peroxide are obtained from hydrogen peroxide whose non-decomposed composition was about 85 % hydrogen peroxide by weight; and/or
wherein the hydrocarbon fuel is an aviation or jet fuel; and/or
wherein the hydrocarbon fuel is JP-8; and/or
wherein the decomposition products of hydrogen peroxide are obtained by contacting hydrogen peroxide with a silver-containing catalyst at a pressure between about 100 psig and about 600 psig and at a temperature between about 100° and about 200°F; and/or
wherein the ejector (10) has an inlet section (12) and the velocity of the primary gas (19) in the inlet section (12) is supersonic.

3. The method of claim 2 wherein the ambient pressure is the ambient pressure at the altitude of an airborne platform; and/or
wherein the coolant is the hydrocarbon fuel.

4. An ejector (10) for educting a secondary gas from a low pressure zone of a chemical laser to a high pressure zone, made substantially of a carbon-carbon fiber composite material.

5. The ejector (10) of claim 4 wherein the weight percent of the carbon-carbon fiber composite material in the ejector (10) is at least 50 % by weight; and/or
wherein the weight percent of the carbon-carbon fiber composite material in the ejector (10) is at least 80 % by weight; and/or
wherein the ejector (10) has an inlet section which has a rectangular cross-section; and/or
wherein the ejector (10) has an outlet section (16) which has a rectangular cross-section; and/or
wherein the ejector comprises inlet (12) and outlet (16) sections having a rectangular cross-sections, and a throat section (14) having a round or oval cross-section; and/or
wherein the ejector (10) comprises an inlet section (12) and a throat (14) section constructed in part of carbon-carbon fiber composite material and wherein the inlet (12) and throat (14) sections have an anti-oxidant material covering a substantial portion of the carbon-carbon fiber composite material therein.

6. The ejector of claim 5 wherein the anti-oxidant material is a silicon-based material.

## Patentansprüche

1. Ein Verfahren zum Bewegen eines Sekundärgases von einer Niederdruckzone eines chemischen Lasers zu einer Hochdruckzone (30), mit dem Schritt eines Abführens des Sekundärgases (21) zu der Hochdruckzone (30) mit einem Ejektor (10), der als Primärgas (19) die Reaktionsprodukte eines Kohlenwasserstoffkraftstoffes und die Spaltprodukte von Wasserstoffperoxid verwendet.

2. Das Verfahren nach Anspruch 1, bei dem das Sekundärgas (21) die Reaktionsprodukte eines chemischen Lasers umfaßt; und/oder
bei dem das Sekundärgas (21) die Reaktionsprodukte eines chemischen Sauerstoff-Jod-COIL-Lasers umfaßt; und/oder
bei dem die Hochdruckzone (30) im wesentlichen Umgebungsdruck hat; und/oder
bei dem die Druckdifferenz zwischen der Hochdruckzone (30) und der Niederdruckzone größer als etwa 0,2 Atmosphären ist; und/oder
bei dem die Druckdifferenz zwischen der Hochdruckzone (30) und der Niederdruckzone etwa zwischen 0,3 Atmosphären liegt; und/oder
bei dem der Ejektor (10) aus einer wenigstens etwa 50%-igen Carbon-Carbon-Faser pro Gewicht besteht; und/oder
bei dem der Ejektor (10) aus einer wenigstens etwa 80%-igen Carbon-Carbon-Faser pro Gewicht besteht; und/oder
bei dem der Primärgasgenerator (24) ummantelt ist und der Primärgasgenerator (24) mittels eines Kühlmittels, das durch eine Ummantelung strömt, gekühlt wird; und/oder
bei dem der Ejektor (10) einen Einlaßabschnitt (12) aufweist, der einen rechteckigen Querschnitt hat; und/oder
bei dem der Ejektor (10) einen Auslaßabschnitt (16) aufweist, der einen rechteckigen Querschnitt hat; und/oder
bei dem der Ejektor (10) Einlaß- (12) und Auslaß- (16) Abschnitte mit rechteckigen Querschnitten und einen Durchlaßabschnitt (14) mit einem runden oder ovalen Querschnitt umfaßt; und/oder
bei dem die Spaltprodukte von Wasserstoffperoxid aus Wasserstoffperoxid erhalten werden, dessen nicht gespaltene Zusammensetzung aus einem etwa zwischen 70%-igen und 95%-igen Wasserstoffperoxid pro Gewicht bestand; und/oder
bei dem die Spaltprodukte von Wasserstoffperoxid aus Wasserstoffperoxid erhalten werden, dessen nicht gespaltene Zusammensetzung aus einem etwa zwischen 80%-igen und 90%-igen Wasserstoffperoxid pro Gewicht bestand; und/oder
bei dem die Spaltprodukte von Wasserstoffperoxid aus Wasserstoffperoxid erhalten werden, dessen nicht gespaltene Zusammensetzung aus einem etwa 85%-igen Wasserstoffperoxid pro Gewicht bestand; und/oder
bei dem der Kohlenwasserstoffkraftstoff ein Kraftstoff für ein Flugzeug oder einen Jet ist; und/oder
bei dem der Kohlenwasserstoffkraftstoff JP-8 ist; und/oder
bei dem die Spaltprodukte von Wasserstoffperoxid erhalten werden, indem Wasserstoffperoxid mit einem Katalysator, der Silber enthält, bei einem Druck zwischen etwa 100 psig und etwa 600 psig und bei einer Temperatur zwischen etwa 37,7°C (100°F) und etwa 93,3°C (200°F) kontaktiert wird; und/oder
bei dem der Ejektor (10) einen Einlaßabschnitt (12) aufweist und die Geschwindigkeit des Primärgases (19) in dem Einlaßabschnitt (12) größer als Schallgeschwindigkeit ist.

3. Das Verfahren nach Anspruch 2, bei dem der Umgebungsdruck der Umgebungsdruck in der Höhe einer von einem Flugzeug beförderten Plattform ist; und/oder
bei dem das Kühlmittel der Kohlenwasserstoffkraftstoff ist.

4. Ein Ejektor (10) zum Abführen eines Sekundärgases von einer Niederdruckzone eines chemischen Lasers zu einer Hochdruckzone, der im wesentlichen aus einem Material aus einer Carbon-Carbon-Fasermischung hergestellt ist.

5. Der Ejektor (10) nach Anspruch 4, bei dem der Gewichtsanteil des Materials aus einer Carbon-Carbon-Fasermischung in dem Ejektor (10) wenigstens 50% pro Gewicht beträgt; und/oder
bei dem der Gewichtsanteil des Materials aus einer Carbon-Carbon-Fasermischung in dem Ejektor (10) wenigstens 80% pro Gewicht beträgt; und/oder
bei dem der Ejektor (10) einen Einlaßabschnitt (12) aufweist, der einen rechteckigen Querschnitt hat; und/oder
bei dem der Ejektor (10) einen Auslaßabschnitt (16) aufweist, der einen rechteckigen Querschnitt hat; und/oder
bei dem der Ejektor Einlaß-(12) und Auslaß-(16)-Abschnitte mit rechteckigen Querschnitten und einen Durchlaßabschnitt (14) mit einem runden oder ovalen Querschnitt aufweist; und/oder
bei dem der Ejektor (10) einen Einlaßabschnitt (12) und einen Durchlaßabschnitt (14) umfaßt, die teilweise aus einem Material aus einer Carbon-Carbon-Fasermischung hergestellt sind, und bei dem die Einlaß-(12) und Durchlaß-(14)-Abschnitte ein Antioxidationsmaterial aufweisen, das einen wesentlichen Bereich des Materials aus einer Carbon-Carbon-Fasermischung bedecken.

6. Der Ejektor nach Anspruch 5, bei dem das Antioxidationsmaterial ein auf Silikon basierendes Material ist.

## Revendications

1. Procédé pour déplacer un gaz secondaire d'une zone de basse pression d'un laser à pompage chimique à une zone de haute pression (30) comprenant l'opération consistant à évacuer le gaz secondaire (21) vers la zone de haute pression (30) avec un éjecteur (10) qui utilise comme gaz primaire (19) les produits de réaction d'un carburant hydrocarboné et les produits de décomposition du peroxyde d'hydrogène.

2. Procédé selon la revendication 1 dans lequel le gaz secondaire (21) comprend les produits de réaction d'un laser à pompage chimique; et / ou
dans lequel le gaz secondaire (21) comprend les produits de réaction d'un laser à pompage chimique à iodure d'oxygène COIL; et / ou
dans lequel la zone à haute pression (30) est sensiblement à la pression ambiante; et / ou
dans lequel la différence de pression entre la zone de haute pression (30) et la zone de basse pression est supérieure à environ 0,2 atmosphère; et / ou
dans lequel la différence de pression entre la zone de haute pression (30) et la zone de basse pression est d'environ 0,3 atmosphère; et / ou
dans lequel l'éjecteur (10) est au moins à environ 50 % en poids en carbone - fibre de carbone; et / ou
dans lequel l'éjecteur (10) est au moins à environ 80 % en poids en carbone - fibre de carbone; et / ou
dans lequel le générateur de gaz primaire (24) est revêtu et le générateur de gaz primaire (24) est refroidi par un liquide réfrigérant s'écoulant à travers un revêtement; et / ou
dans lequel l'éjecteur (10) a une portion d'admission (12) qui a une section transversale rectangulaire; et / ou
dans lequel l'éjecteur (10) a une portion de sortie (12) qui a une section transversale rectangulaire; et / ou
dans lequel l'éjecteur (10) comprend des portions d'admission (12) et de sortie (16) ayant des sections transversales rectangulaires, une portion d'étranglement (14) ayant une section transversale ronde ou ovale; et / ou
dans lequel les produits de décomposition du peroxyde d'hydrogène sont obtenus à partir de peroxyde d'hydrogène dont la composition non décomposé était d'entre environ 70 % et 95 % en poids de peroxyde d'hydrogène; et / ou
dans lequel les produits de décomposition du peroxyde d'hydrogène sont obtenus à partir de peroxyde d'hydrogène dont la composition non décomposé était d'entre environ 80 % et 90 % en poids de peroxyde d'hydrogène; et / ou
dans lequel les produits de décomposition du peroxyde d'hydrogène sont obtenus à partir de peroxyde d'hydrogène dont la composition non décomposé était d'environ 85 % en poids de peroxyde d'hydrogène; et / ou
dans lequel le carburant hydrocarboné est un carburant d'aviation ou un carburant pour réacteurs; et / ou
dans lequel le carburant hydrocarboné est le JP-8; et / ou
dans lequel les produits de décomposition du peroxyde d'hydrogène sont obtenus en mettant en contact du peroxyde d'hydrogène avec un catalyseur contenant de l'argent à une pression comprise entre environ 100 psig et environ 600 psig et à une température située entre environ 37,7 °C et 93,3 °C (100 °F et 200 °F); et / ou
dans lequel l'éjecteur (10) a une portion d'admission (12) et la vitesse du gaz primaire (19) dans la portion d'admission (18) est supersonique.

3. Procédé selon la revendication 2 dans lequel la pression ambiante est la pression ambiante à l'altitude d'une plate-forme aéroportée; et / ou
dans lequel le liquide réfrigérant est le carburant hydrocarboné.

4. Ejecteur (10) pour évacuer un gaz secondaire d'une zone de basse pression d'un laser à pompage chimique à une zone de haute pression fait essentiellement d'un matériau composite en carbone - fibre de carbone.

5. Ejecteur (10) selon la revendication 4 dans lequel la teneur en poids du matériau composite en carbone - fibre de carbone dans l'éjecteur (10) est d'au moins 50 % en poids; et / ou
dans lequel la teneur en poids du matériau composite en carbone - fibre de carbone dans l'éjecteur (10) est d'au moins 80 % en poids; et / ou
dans lequel l'éjecteur (10) a une portion d'admission qui a une section transversale rectangulaire; et / ou
dans lequel l'éjecteur (10) a une portion de sortie (16) qui a une section transversale rectangulaire; et / ou
dans lequel l'éjecteur comprend des portions d'admission (12) et de sortie (16) ayant des sections transversales rectangulaires, et une section d'étranglement (14) ayant une section transversale ronde ou ovale; et / ou
dans lequel l'éjecteur (10) comprend une portion d'admission (12) et une portion d'étranglement (14) faites en partie en matériau composite en carbone - fibre de carbone et dans lequel les portions d'admission (12) et d'étranglement (16) ont un matériau antioxydant recouvrant une partie substantielle du matériau composite en carbone - fibre de carbone qui s'y trouve.

6. Ejecteur selon la revendication 5 dans lequel le matériau antioxydant est un matériau à base de silicium.
